# EUROPEAN PATENT APPLICATION

(11) **EP 4 635 381 A1**
(43) Date of publication of application: **22.10.2025**
(21) Application number: 25170705.5
(22) Date of filing: 15.04.2025
(51) Int. Cl.: A47J 43/042, A47J 43/046, A47J 43/07

(54) **MILK FROTHER**

(30) Priority: 17.04.2024 CN 202410461162
(71) Applicant: Shenzhen Hesung Innovation Technology Co., Ltd, Shenzhen, Guangdong 518000 (CN)
(72) Inventor: CHEN, Dezhi, Guangdong, 518000 (CN); YAN, Han, Guangdong, 518000 (CN); YANG, Xingxing, Guangdong, 518000 (CN); DAI, Xianglu, Guangdong, 518000 (CN); HE, Aimin, Guangdong, 518000 (CN)
(74) Representative: Gill Jennings & Every LLP

(57) **Abstract**

Provided is a milk frother, relating to the technical field of milk frothers. The milk frother includes a base, a milk frother body and a blade assembly. A drive assembly is disposed within the base. An output shaft of the drive assembly is connected to a drive turntable. A first magnet is disposed on the drive turntable. The milk frother body is detachably connected to the base. A thimble assembly is disposed within the milk frother body. The thimble assembly is securely connected to the bottom wall of the milk frother body. The blade assembly is sleeved on the thimble assembly and keeps a preset distance m from the bottom wall of the milk frother body. A second magnet is disposed within the blade assembly and configured to magnetically connect to the first magnet. The milk frother can prevent milk from seeping into a drive assembly and damaging the drive assembly, thereby improving the safety and prolonging the service life of the milk frother. At the same time, the drive assembly does not occupy the volume of a milk frother body so that a user can make more milk froth.

## Description

### TECHNICAL FIELD

The present disclosure relates to the technical field of milk frothers and, in particular, to a milk frother.

### BACKGROUND

A milk frother, also referred to as a froth maker, is mainly used for making milk froth. The milk frother plays an important role in coffee making, especially when making classic coffees such as cappuccino and latte, where milk froth is an indispensable element. Therefore, people favor the milk frother constantly.

In the related art, the milk frother is classified into two types according to driving manners. The first type is a top-mounted milk frother, that is, a drive assembly is disposed on a pot lid or a cup lid of the milk frother. The second type is a bottom-mounted milk frother, that is, a drive assembly is located at the pot bottom or the cup bottom of the milk frother. After milk is poured, the drive assembly is immersed in the milk and then started to stir and froth the milk. No matter the top-mounted milk frother or the bottom-mounted milk frother, during the process of frothing milk, the milk seeps into a motor along an output shaft and through a clearance between the output shaft and a sealing sleeve, causing motor rust, a short circuit and other faults that make the milk frother work abnormally and increasing safety risks. Meanwhile, the drive assembly in the milk frother in the related art occupies the space within the container, further reducing the volume of milk froth made by a user to a certain extent and reducing the user experience.

Therefore, a milk frother is urgently designed to solve the preceding technical problems.

### SUMMARY

An object of the present disclosure is to provide a milk frother so that milk can be prevented from seeping into a drive assembly and damaging the drive assembly, improving the safety and prolonging the service life of the milk frother. Meanwhile, the drive assembly does not occupy the volume of a milk frother body so that a user can make more milk froth.

To achieve this object, the present disclosure adopts the technical solutions below.

The present disclosure provides a milk frother. The milk frother includes a base, a milk frother body and a blade assembly.

A drive assembly is disposed within the base, an output shaft of the drive assembly is connected to a drive turntable, and a first magnet is disposed on the drive turntable.

The milk frother body is detachably connected to the base, where a thimble assembly is disposed within the milk frother body and securely connected to a bottom wall of the milk frother body.

The blade assembly is sleeved on the thimble assembly and keeps a preset distance m from the bottom wall of the milk frother body, where a second magnet is disposed within the blade assembly and configured to magnetically connect to the first magnet.

As an optional technical solution for the milk frother, the blade assembly includes a magnet box, where the magnet box is sleeved on the thimble assembly, and the second magnet is disposed within the magnet box.

As an optional technical solution for the milk frother, the magnet box is formed by buckling a magnet lid and a magnet seat, and a mounting position for mounting the second magnet is disposed on the magnet seat and/or the magnet lid.

As an optional technical solution for the milk frother, the blade assembly further includes a second connection column, a third connection column and a blade, where the blade is disposed on an outer circumferential side of the third connection column, the third connection column is soldered to the magnet box, the second connection column is located above the third connection column, and a filter screen is disposed between the second connection column and the third connection column, sleeved on the third connection column and configured to filter and cut milk froth.

As an optional technical solution for the milk frother, the blade keeps a preset distance d from the magnet box.

As an optional technical solution for the milk frother, the filter screen is provided with a through hole and is circular, where the through hole is sleeved on the third connection column, and a diameter of the through hole is less than half of an outer diameter of the filter screen.

As an optional technical solution for the milk frother, a plurality of blades are provided and uniformly arranged with respect to an axis of the third connection column.

As an optional technical solution for the milk frother, the blade assembly further includes a washer, where the washer is disposed above the filter screen, and the washer and the blade jointly press against an edge of the filter screen tightly.

As an optional technical solution for the milk frother, the milk frother further includes a spoiler assembly, where the spoiler assembly is magnetically connected to the thimble assembly and located above the blade assembly, and a magnetic force between the spoiler assembly and the thimble assembly is greater than a centrifugal force of rotation of the blade assembly to enable the spoiler assembly to remain in a static state when the blade assembly stirs milk.

As an optional technical solution for the milk frother, the spoiler assembly includes a spoiler blade and a first connection column, where the spoiler blade is disposed on an outer circumferential side of the first connection column, the first connection column is magnetically connected to the thimble assembly, and the spoiler blade keeps a preset distance e from the washer.

The beneficial effects of the present disclosure include at least as below.

The present disclosure provides the milk frother. The milk frother includes the base, the milk frother body and the blade assembly. The drive assembly is disposed within the base. The output shaft of the drive assembly is connected to the drive turntable. The first magnet is disposed on the drive turntable. The milk frother body is detachably connected to the base. The thimble assembly is disposed within the milk frother body. The thimble assembly is securely connected to the bottom wall of the milk frother body. The blade assembly is sleeved on the thimble assembly and keeps the preset distance m from the bottom wall of the milk frother body. The second magnet is disposed within the blade assembly and configured to magnetically connect to the first magnet. In the present disclosure, the milk frother has a simple structure. Through the configuration of the base, the milk frother body and the blade assembly, the base is detachably connected to the milk frother body, the drive assembly is disposed within the base and drives the drive turntable to rotate, the first magnet is disposed within the drive turntable, and the second magnet is disposed in the blade assembly within the milk frother body. Through the magnetic action of the first magnet and the second magnet, the blade assembly can be rotated synchronously when the drive assembly drives the drive turntable to rotate so that the drive assembly can indirectly drive the blade assembly to rotate. The milk within the milk frother body cannot seep into the drive assembly in the base, thereby playing a certain role in protecting the drive assembly, prolonging the service life of the drive assembly and improving the safety performance. Moreover, the drive assembly in the present disclosure does not occupy the space within the milk frother body so that a user can make more milk froth, and the user experience can be improved.

### BRIEF DESCRIPTION OF DRAWINGS

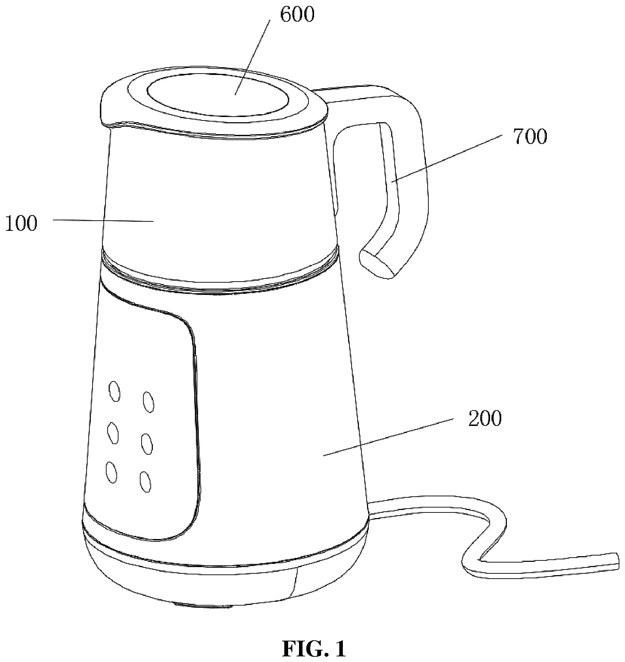

To illustrate the technical solutions in embodiments of the present disclosure more clearly, the drawings used in the description of the embodiments of the present disclosure are briefly described below. Apparently, the drawings described below illustrate only part of the embodiments of the present disclosure, and those of ordinary skill in the art may obtain other drawings based on the content of the embodiments of the present disclosure and the drawings on the premise that no creative work is done.FIG. 1 is a view illustrating the structure of a milk frother according to an embodiment of the present disclosure.
FIG. 2 is an exploded view of a milk frother according to an embodiment of the present disclosure.
FIG. 3 is a section view of a milk frother according to an embodiment of the present disclosure.
FIG. 4 is a partial enlarged view of part A of FIG. 3.
FIG. 5 is a view illustrating the structure of a milk frother body according to an embodiment of the present disclosure.
FIG. 6 is an exploded view of a milk frother body and a stirring spoiler device according to an embodiment of the present disclosure.
FIG. 7 is a section view of a milk frother body and a stirring spoiler device according to an embodiment of the present disclosure.
FIG. 8 is a partial enlarged view of part B of FIG. 7. FIG. 9 is a view illustrating the structure of a stirring spoiler device according to an embodiment of the present disclosure.
FIG. 10 is an exploded view of a stirring spoiler device according to an embodiment of the present disclosure.
FIG. 11 is a view illustrating the structure of a spoiler assembly according to an embodiment of the present disclosure.
FIG. 12 is a diagram illustrating a clearance size after the assembly of a spoiler assembly and a blade assembly according to an embodiment of the present disclosure.

### Reference list

- 100: milk frother body
- 110: opening
- 200: base
- 210: drive assembly
- 220: drive turntable
- 230: first magnet
- 240: heating plate
- 300: thimble assembly
- 310: thimble fixing member
- 320: thimble sleeve
- 330: second adsorption block
- 400: blade assembly
- 410: second connection column
- 420: second snap rib
- 430: third connection column
- 440: second magnet
- 450: magnet box
- 4501: magnet lid
- 4502: magnet seat
- 4503: mounting position
- 460: blade
- 470: filter screen
- 4701: through hole
- 480: washer
- 500: spoiler assembly
- 510: spoiler blade
- 520: first connection column
- 530: first counterbore
- 540: second counterbore
- 550: first absorption block
- 560: lifting member
- 570: first snap rib
- 600: lid body
- 700: handle

### DETAILED DESCRIPTION

To make solved problems, adopted technical solutions and achieved effects of the present disclosure more apparent, the technical solutions of the present disclosure are described hereinafter in conjunction with the drawings and the embodiments.

In the description of the present disclosure, unless otherwise expressly specified and limited, the term "connected to each other", "connected", or "secured" is to be construed in a broad sense, for example, as securely connected, detachably connected, or integrated; mechanically connected or electrically connected; directly connected to each other or indirectly connected to each other via an intermediary; or internally connected or interactional between two components. For those of ordinary skill in the art, specific meanings of the preceding terms in the present disclosure may be construed based on specific situations.

In the present disclosure, unless otherwise expressly specified and limited, when a first feature is described as "above" or "below" a second feature, the first feature and the second feature may be in direct contact or be in contact via another feature between the two features. Moreover, when the first feature is described as "on", "above" or "over" the second feature, the first feature is right on, above or over the second feature, or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In the description of this embodiment, the orientation or position relationships indicated by terms such as "above", "below", "left" and "right" are based on the orientation or position relationships shown in the drawings. These orientations or position relationships are only for ease of description and simplifying an operation and do not indicate or imply that the referred device or element must have a specific orientation and is constructed and operated in a specific orientation. Thus, these orientations or position relationships are not to be construed as limiting the present disclosure. In addition, the terms "first" and "second" are used only for distinguishing between descriptions and have no special meaning.

In the description of the embodiments, "multiple" means two or more unless otherwise specified.

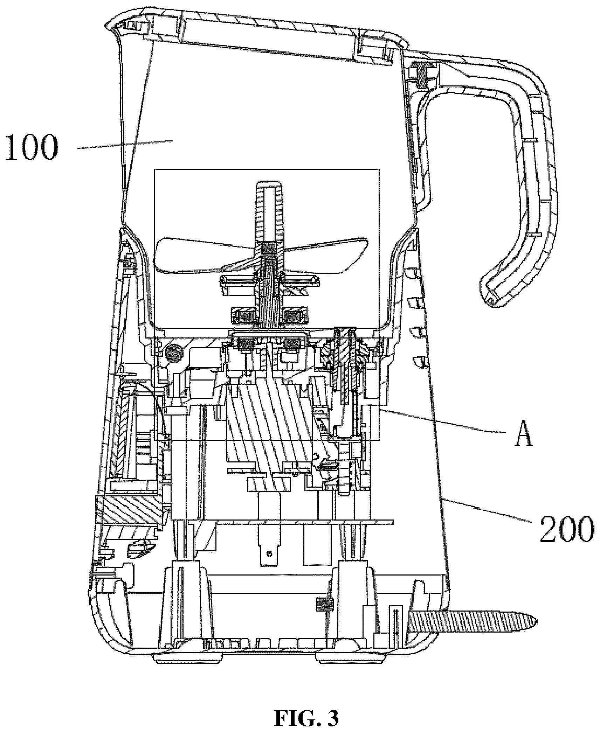

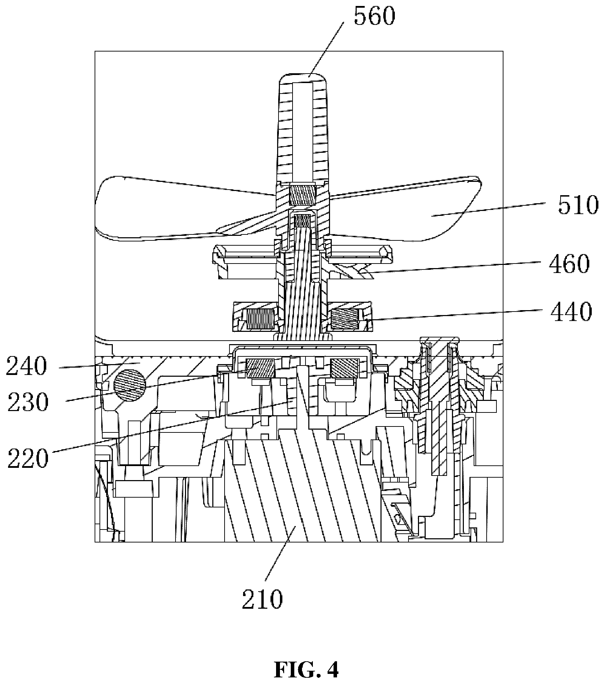

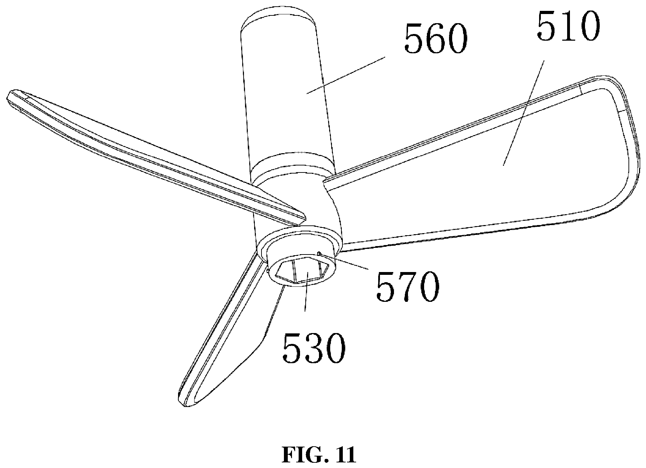

As shown in FIGS. 1 to 12, this embodiment provides a milk frother so that milk can be prevented from seeping into a drive assembly 210 and damaging the drive assembly 210, improving the safety and prolonging the service life of the milk frother. Meanwhile, the drive assembly 210 does not occupy the volume of a milk frother body 100 so that a user can make more milk froth.

Specifically, as shown in FIGS. 1 to 6, the milk frother includes a base 200, the milk frother body 100 and a blade assembly 400. The drive assembly 210 is disposed within the base 200. An output shaft of the drive assembly 210 is connected to a drive turntable 220. A first magnet 230 is disposed on the drive turntable 220. The milk frother body 100 is detachably connected to the base 200. A thimble assembly 300 is disposed within the milk frother body 100. The thimble assembly 300 is securely connected to the bottom wall of the milk frother body 100. The blade assembly 400 is sleeved on the thimble assembly 300 and keeps a preset distance m from the bottom wall of the milk frother body 100. A second magnet 440 is disposed within the blade assembly 400 and configured to magnetically connect to the first magnet 230.

Based on the preceding design, in this embodiment, through the magnetic action of the first magnet 230 and the second magnet 440, the blade assembly 400 can be rotated synchronously when the drive assembly 210 drives the drive turntable 220 to rotate so that the drive assembly 210 can indirectly drive the blade assembly 400 to rotate. The blade assembly 400 keeps the preset distance m from the bottom wall of the milk frother body 100, thereby facilitating the smooth rotation of the blade assembly 400 and avoiding interference between the blade assembly 400 and the bottom wall of the milk frother body 100.

Compared with the related art, the milk frother in this embodiment has a simple structure. Through the configuration of the base 200, the milk frother body 100 and the blade assembly 400, the base 200 is detachably connected to the milk frother body 100, the drive assembly 210 is disposed within the base 200 and drives the drive turntable 220 to rotate, the first magnet 230 is disposed within the drive turntable 220, and the second magnet 440 is disposed in the blade assembly 400 within the milk frother body 100. Through the magnetic action of the first magnet 230 and the second magnet 440, the blade assembly 400 can be rotated synchronously when the drive assembly 210 drives the drive turntable 220 to rotate so that the drive assembly 210 can indirectly drive the blade assembly 400 to rotate. The milk within the milk frother body 100 does not seep into the drive assembly 210 in the base 200, thereby playing a certain role in protecting the drive assembly 210, prolonging the service life of the drive assembly 210 and improving the safety performance. Moreover, the drive assembly 210 in this embodiment does not occupy the space within the milk frother body 100 so that the user can make more milk froth, and the user experience can be improved.

In this embodiment, the milk frother body 100 is detachably connected to the base 200 so that the milk frother body 100 can be taken out from the base 200 after the user finishes making the milk froth, thereby improving the use flexibility.

Optionally, the drive assembly 210 in this embodiment may be configured as a motor.

Optionally, in this embodiment, multiple first magnets 230 and multiple second magnets 440 are provided. Exemplarily, four, five or six first magnets 230 and second magnets 440 are provided, the multiple first magnets 230 are in one-to-one correspondence with the multiple second magnets 440, and the multiple first magnets 230 and the multiple second magnets 440 are magnetically opposite.

Optionally, in this embodiment, the distance from each first magnet 230 to a respective second magnet 440 is between 3 mm and 6 mm. When the distance from the each first magnet 230 to the respective second magnet 440 is less than 3 mm, the starting torque of the drive assembly 210 required by the blade assembly 400 is increased. When the distance from the each first magnet 230 to the respective second magnet 440 is greater than 6 mm, the rotation rate of the drive assembly 210 required by the blade assembly 400 is increased. However, the increase in the torque and rotation rate of the drive assembly 210 shortens the service life of the drive assembly 210. Therefore, that the distance from the each first magnet 230 to the respective second magnet 440 is between 3 mm and 6 mm is considered comprehensively so that milk froth meeting a requirement can be made while the service life of the drive assembly 210 can be prolonged.

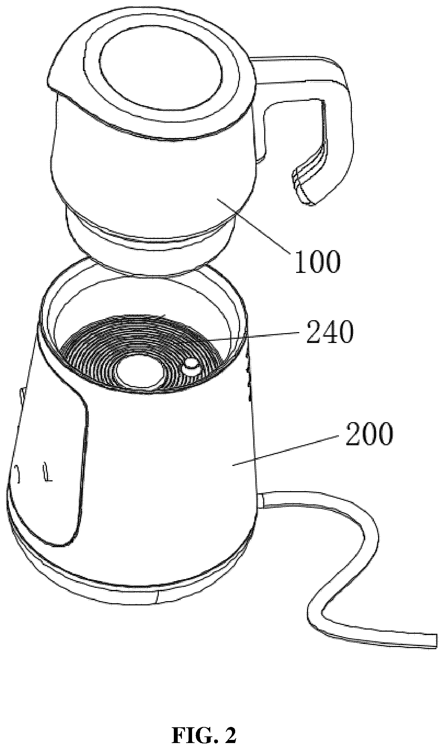

As shown in FIGS. 2 to 4, in this embodiment, a heating plate 240 is further disposed within the base 200 and configured to heat the milk within the milk frother body 100, thereby facilitating the preparation of milk froth drinks at different temperatures. Optionally, the heating temperature range of the heating plate 240 may be between 50°C and 80°C. The heating plate 240 is electrically connected to a center control screen on the base 200 so that the user can selectively decide whether to enable the heating plate 240. When the user does not need the heating plate 240 to heat the milk, the user does not need to press a heating button on the center control screen at this time so that cold drinks can be prepared for the user to enjoy. It is to be noted that the heating plate 240 in this embodiment is a conventional member in this field, so the heating principle for the heating plate 240 to heat the milk within the milk frother body 100 and the specific structure of the heating plate 240 are not elaborated in this embodiment.

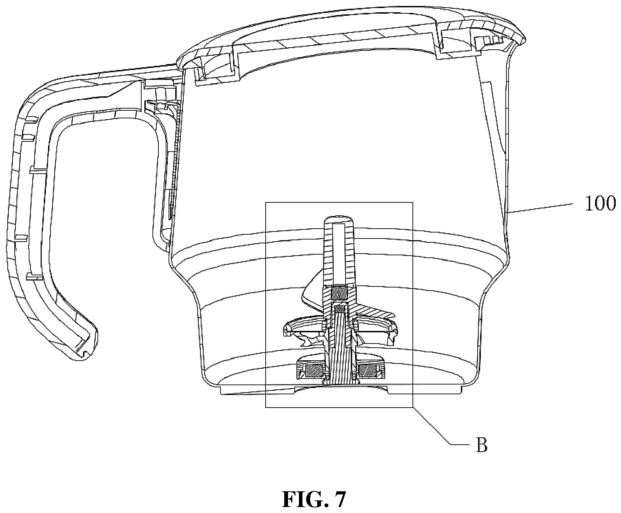

As shown in FIGS. 7 to 11, in this embodiment, the blade assembly 400 includes a magnet box 450. The magnet box 450 is sleeved on the thimble assembly 300. The multiple second magnets 440 are disposed within the magnet box 450. The configuration of the magnet box 450 can play a certain role in protecting the multiple second magnets 440 and avoid affecting the magnetic performances of the multiple second magnets 440 due to the contact between the milk and the multiple second magnets 440. Meanwhile, the multiple second magnets 440 can also be prevented from polluting the milk so that the safety can be improved.

Further, in this embodiment, the magnet box 450 is formed by buckling a magnet lid 4501 and a magnet seat 4502, and mounting positions 4503 for mounting the multiple second magnets 440 are disposed on the magnet seat 4502 and/or the magnet lid 4501. The configuration of the mounting positions 4503 can play a certain role in limiting and securing the multiple second magnets 440, preventing the multiple second magnets 440 from being shaken or shifted within the magnet box 450 and ensuring the magnetic force of the multiple first magnets 230 and the multiple second magnets 440.

Optionally, the magnet box 450 in this embodiment may be made of food-grade stainless steel such as 304 stainless steel or 316 stainless steel.

As shown in FIGS. 7 to 11, in this embodiment, the blade assembly 400 further includes a second connection column 410, a third connection column 430 and a blade 460. The blade 460 is disposed on the outer circumferential side of the third connection column 430. The third connection column 430 is soldered to the magnet box 450. For example, the third connection column 430 may be soldered to the magnet box 450 through ultrasound, thermal conductivity, or laser. The second connection column 410 is located above the third connection column 430. A filter screen 470 is disposed between the second connection column 410 and the third connection column 430, sleeved on the third connection column 430 and configured to filter and cut the milk froth so that coarse milk froth can become more delicate through the cutting of the filter screen 470, improving the quality of the milk froth. Moreover, the filter screen 470 can also cut the air so that the air can be fully mixed with the milk, improving the mixed uniformity of the air and the milk and thus improving the uniformity of the milk froth.

Optionally, in this embodiment, the mesh number of the filter screen 470 may be between 40 and 100, and the thickness of the filter screen 470 may be between 0.08 mm and 1.2 mm.

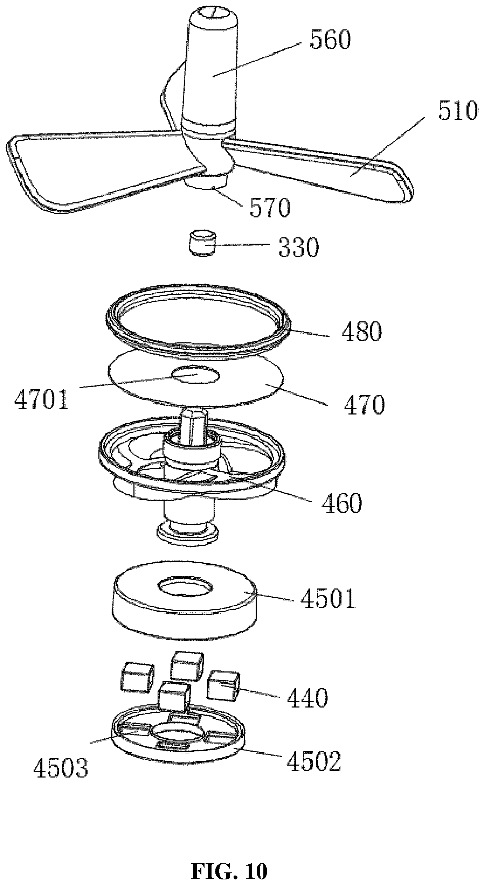

Further, as shown in FIG. 10, the filter screen 470 is provided with a through hole 4701 and is circular, the through hole 4701 is sleeved on the third connection column 430, and the diameter of the through hole 4701 is less than half of the outer diameter of the filter screen 470 so that the area of the filter screen 470 can be increased as much as possible, and the effect of cutting the milk froth and the air by the filter screen 470 can be improved, thereby making the milk froth made denser and more delicate.

Optionally, in this embodiment, multiple blades 460 are provided and uniformly arranged with respect to the axis of the third connection column 430. Exemplarily, three, four or five blades 460 may be provided, thereby improving the effect of stirring the milk and making the milk froth made more uniform.

Further, the thickness of the blade 460 is between 1.0 mm and 2.5 mm, the inclination degree of the blade 460 is between 12° and 30°, the height of the blade 460 is between 2.5 mm and 3.5 mm, and the curvature of the each blade 460 is between 0° and 5°. Certainly, an operator may also configure other number and size of blades 460 according to actual requirements. Details are not repeated herein.

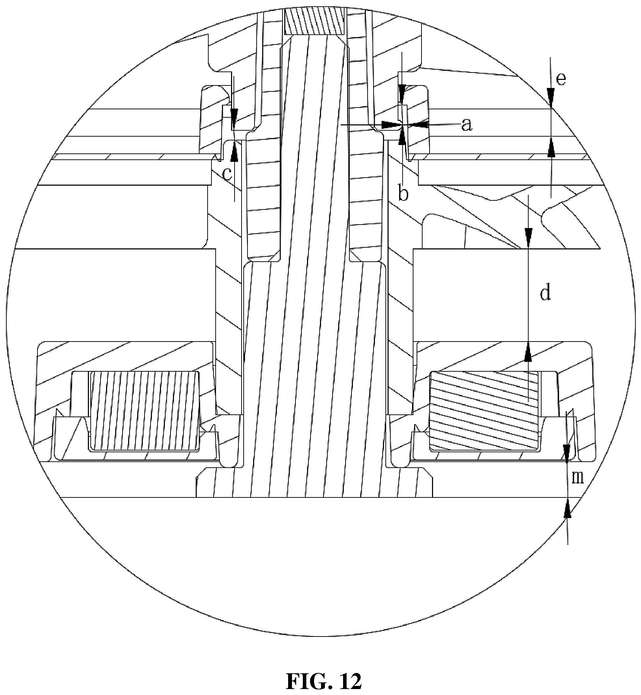

As shown in FIG. 12, in this embodiment, the blade 460 keeps a preset distance d from the magnet box 450, thereby avoiding interference between the each blade 460 and the magnet box 450 when the blade 460 is rotated and improving the safety. Exemplarily, the preset distance d in this embodiment may be between 4 mm and 6 mm.

As shown in FIG. 10, in this embodiment, the blade assembly 400 further includes a washer 480, the washer 480 is disposed above the filter screen 470, and the washer 480 and the multiple blades 460 jointly press against the edge of the filter screen 470 tightly, thereby improving the stability and reliability of the filter screen 470 and preventing the filter screen 470 from falling off.

As shown in FIG. 12, in this embodiment, a spoiler assembly 500 is located above the blade assembly 400 and includes the spoiler blade 510 and a first connection column 520, the spoiler blade 510 is disposed on the outer circumferential side of the first connection column 520, a first absorption block 550 within the first connection column 520 is magnetically connected to a second absorption block 330 within the thimble assembly 300, and the spoiler blade 510 keeps a preset distance e from the washer 480. Exemplarily, the preset distance e may be between 1 mm and 2.5 mm. This can avoid interference between the washer 480 and the spoiler blade 510 when the blade assembly 400 is rotated so that the smooth rotation of the blade assembly 400 can be ensured while that the spoiler assembly 500 is not rotated can be ensured, thereby implementing the spoiler function of the milk.

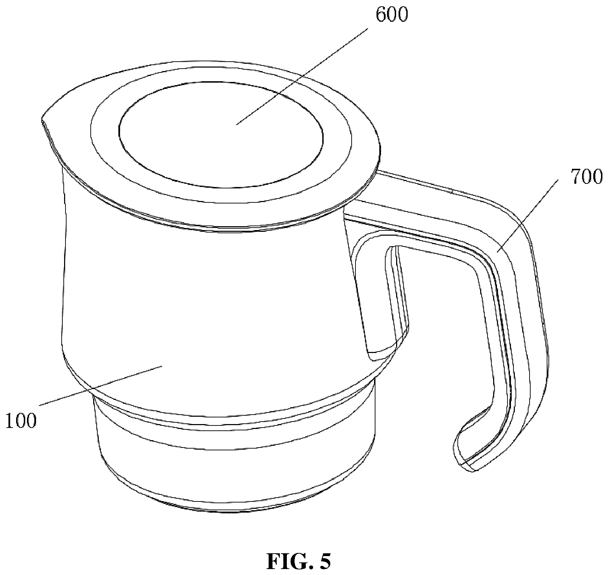

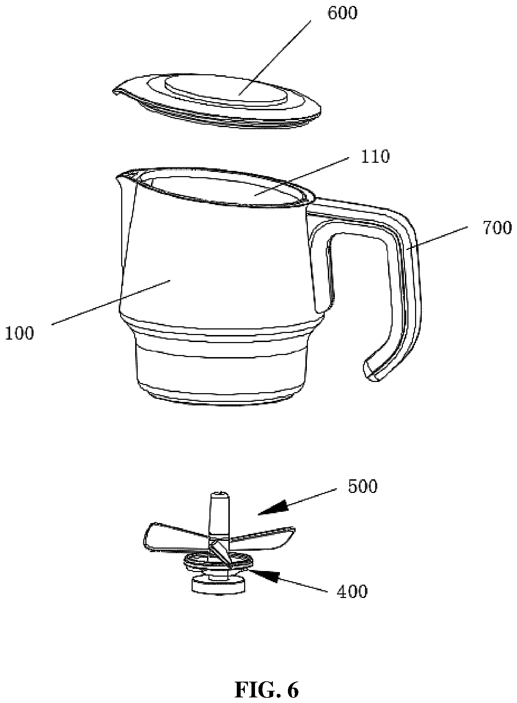

As shown in FIGS. 5 and 6, in this embodiment, the milk frother further includes a lid body 600 and a handle 700. The lid body 600 can cover an opening 110 on the milk frother body 100 to prevent foreign objects such as external dust from falling into the milk frother body 100, improving the safety. The handle 700 and the milk frother body 100 are integrally formed, or the handle 700 snaps into the milk frother body 100. The configuration of the handle 700 can improve the convenience for the user to use the milk frother and the user experience. The number of handles 700 is not limited in this embodiment.

As shown in FIGS. 5 to 8, the bottom within the milk frother body 100 is provided with a stirring spoiler device. The stirring spoiler device is configured to stir and spoiler the milk within the milk frother body 100. The stirring spoiler device mainly includes the thimble assembly 300, the spoiler assembly 500 and the preceding blade assembly 400. The thimble assembly 300 is disposed within the milk frother body 100 and securely connected to the bottom wall of the milk frother body 100. The blade assembly 400 is sleeved on the thimble assembly 300 and can rotate around the thimble assembly 300. The spoiler assembly 500 is magnetically connected to the thimble assembly 300 and located above the blade assembly 400. The magnetic force between the spoiler assembly 500 and the thimble assembly 300 is greater than the sum of the gravity of the spoiler assembly 500 and the gravity of the blade assembly 400 and greater than the centrifugal force of the rotation of the blade assembly 400 to enable the spoiler assembly 500 to remain in a static state when the blade assembly 400 stirs the milk.

Based on the preceding design, in this embodiment, the thimble assembly 300 is soldered to the bottom wall of the milk frother body 100, or the thimble assembly 300 and the bottom wall of the milk frother body 100 are integrally formed. The blade assembly 400 is sleeved on the thimble assembly 300 and can rotate with respect to the thimble assembly 300 so that the milk within the milk frother body 100 can be stirred. The spoiler assembly 500 is magnetically connected to the thimble assembly 300 and located above the blade assembly 400 while the magnetic force between the spoiler assembly 500 and the thimble assembly 300 is greater than the centrifugal force of the rotation of the blade assembly 400 so that when the blade assembly 400 stirs the milk, the milk can be stirred and rotated under the action of the centrifugal force of the blade assembly 400. In other words, the centrifugal force of a stirring assembly applied to the milk is less than the magnetic force between the spoiler assembly 500 and the thimble assembly 300 so that when the stirring assembly stirs the milk, the spoiler assembly 500 can remain in a relatively static state with the thimble assembly 300, thereby achieving the effect of "the blade assembly 400 is rotated while the spoiler assembly 500 is not rotated". It is to be understood that when the blade assembly 400 is rotated to drive the milk to be stirred and rotated, the spoiler assembly 500 is not rotated at this time so that the spoiler assembly 500 can spoil the rotated milk, reducing or avoiding whirlpools within the milk as much as possible, and so that the milk froth made by the milk frother can become denser and more delicate, making it easier to draw on drinks.

Compared with the related art, in this embodiment, the stirring spoiler device has a simple structure. The spoiler assembly 500 is magnetically connected to the thimble assembly 300, and the magnetic force between the spoiler assembly 500 and the thimble assembly 300 is greater than the sum of the gravity of the spoiler assembly 500 and the gravity of the blade assembly 400. In this manner, when the user pours out the milk froth, the spoiler assembly 500 may still be magnetically connected to the thimble assembly 300 stably so that the spoiler assembly 500 and the blade assembly 400 can be prevented from falling off and injuring the user, and safety hidden dangers can be reduced. Meanwhile, the magnetic force between the spoiler assembly 500 and the thimble assembly 300 is greater than the centrifugal force of the rotation of the blade assembly 400 to enable the spoiler assembly 500 to remain in the static state when the blade assembly 400 stirs the milk so that the spoiler assembly 500 can spoil the rotated milk, and the milk froth made can become more delicate and denser.

Moreover, when the user needs to clean the stirring spoiler device, the user only needs to lift the spoiler assembly 500 to release the magnetic connection between the spoiler assembly 500 and the thimble assembly 300, thereby making it easier to take out the spoiler assembly 500 and the blade assembly 400 for cleaning. It is to be noted that the upward lifting force of the spoiler assembly 500 by the user is greater than the magnetic force between the spoiler assembly 500 and the thimble assembly 300, facilitating the disassembly and cleaning of the spoiler assembly 500 and the blade assembly 400 and improving the user experience.

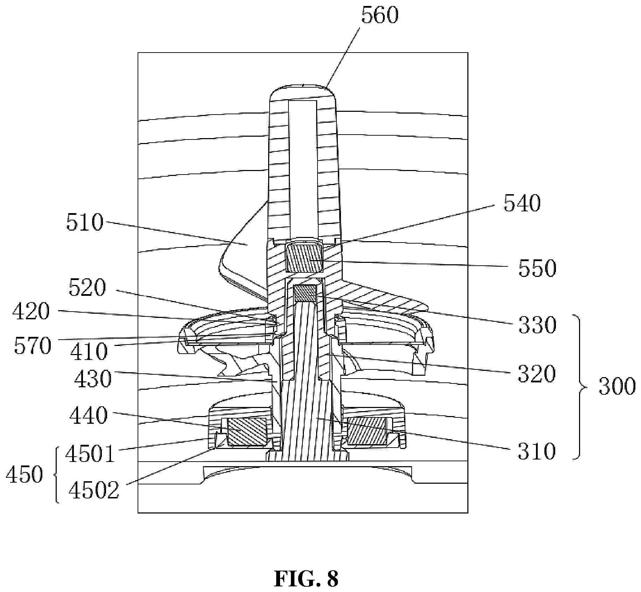

As shown in FIGS. 7 and 8, in this embodiment, the thimble assembly 300 includes a thimble fixing member 310 and a thimble sleeve 320. The thimble fixing member 310 is securely connected to the bottom wall of the milk frother body 100. The thimble sleeve 320 is sleeved on the thimble fixing member 310 and in an interference fit with the thimble fixing member 310. The spoiler assembly 500 is connected to the thimble sleeve 320.

Specifically, in this embodiment, the thimble fixing member 310 may be secured to the bottom wall of the milk frother body 100 through soldering or riveting. The thimble fixing member 310 is cylindrical to make it easier for the blade assembly 400 to rotate and is made of metal to improve strength and prolong the service life. The thimble sleeve 320 is sleeved on the thimble fixing member 310 and in an interference fit with the thimble fixing member 310 so that the milk can be prevented from seeping into a clearance between the thimble fixing member 310 and the thimble sleeve 320, and the service life can be prolonged.

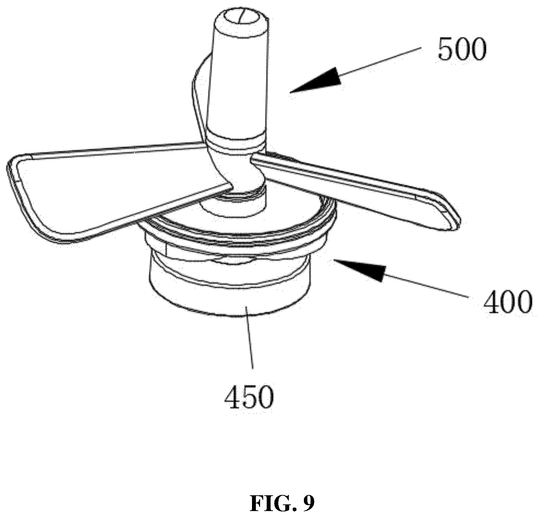

Further, referring to FIGS. 9 to 11, the outer circumferential side of the thimble sleeve 320 is polygonal, the spoiler assembly 500 includes the spoiler blade 510 and the first connection column 520, the spoiler blade 510 is disposed on the outer circumferential side of the first connection column 520, a first counterbore 530 is disposed on the first connection column 520, the inner wall of the first counterbore 530 is polygonal, and the first counterbore 530 is sleeved on the outer circumferential side of the thimble sleeve 320.

Optionally, in this embodiment, the outer circumferential side of the thimble sleeve 320 is externally hexagonal, the inner wall of the first counterbore 530 is internally hexagonal, the spoiler assembly 500 is sleeved to the thimble sleeve 320 through the first counterbore 530 so that the spoiler assembly 500 can be prevented from being rotated with respect to the thimble sleeve 320. Certainly, the operator may also configure the outer circumferential side of the thimble sleeve 320 and the inner circumferential side of the first counterbore 530 as other non-circular structures so that the spoiler assembly 500 cannot be rotated.

With continued reference to FIGS. 7 and 8, in this embodiment, a second counterbore 540 is also disposed on the first connection column 520, the first absorption block 550 is disposed within the second counterbore 540, the second absorption block 330 is disposed within the thimble sleeve 320, and the first absorption block 550 is magnetically connected to the second absorption block 330. Exemplarily, the first absorption block 550 and the second absorption block 330 may be magnets and are magnetically opposite, or one of the first absorption block 550 or the second absorption block 330 is a magnet while the other one of the first absorption block 550 or the second absorption block 330 is an iron block.

Optionally, in this embodiment, the first absorption block 550 and the second absorption block 330 are disposed facing each other so that the magnetic force between the spoiler assembly 500 and the thimble sleeve 320 can be improved, ensuring the magnetic stability and reliability of the spoiler assembly 500 and the thimble sleeve 320.

Optionally, in this embodiment, the density of magnetic beams between the first absorption block 550 and the second absorption block 330 is not less than 100 mT so that when the user pours out the milk froth, the blade assembly 400 and the spoiler assembly 500 can be ensured not to fall down.

Optionally, in this embodiment, multiple first absorption blocks 550 and multiple second absorption blocks 330 may be provided, and the multiple first absorption blocks 550 are disposed in one-to-one correspondence with the multiple second absorption blocks 330.

Optionally, in this embodiment, multiple spoiler blades 510 are provided and uniformly arranged with respect to the axis of the first connection column 520 so that the spoiler effect of the multiple spoiler blades 510 can be improved, and whirlpools caused by the rotated milk can be reduced or avoided.

Exemplarily, in this embodiment, three, four or five spoiler blades 510 may be provided. The inclination degree of each spoiler blade 510 is between 35° and 55°, the height of the each spoiler blade 510 is between 12 mm and 16 mm, the curvature of the each spoiler blade 510 is between 0° and 8°, and the clearance between the each spoiler blade 510 and the inner wall of the milk frother body 100 is between 1 mm and 3 mm. Certainly, the operator may also configure other numbers and sizes of spoiler blades 510 according to actual requirements. Details are not repeated herein.

With continued reference to FIGS. 7 and 8, in this embodiment, the spoiler assembly 500 further includes a lifting member 560. The lifting member 560 is connected to an end of the first connection column 520 facing away from the blade assembly 400. The configuration of the lifting member 560 can make it easier for the user to access, place and lift the spoiler assembly 500, facilitating operation.

With continued reference to FIGS. 7 and 8, in this embodiment, a first snap rib 570 protrudes from the outer wall of the first connection column 520, the blade assembly 400 includes the second connection column 410 and a second snap rib 420, the second connection column 410 is sleeved on the thimble assembly 300, the second snap rib 420 is disposed on the inner wall of the second connection column 410 along the height direction of the thimble assembly 300, the projection region area of the first snap rib 570 is greater than the projection region area of the second snap rib 420, and the first snap rib 570 passes through the second snap rib 420 and is located below the second snap rib 420. The blade assembly 400 is buckled to the spoiler assembly 500 through the configuration of the first snap rib 570 and the second snap rib 420 so that when the user lifts the spoiler assembly 500, the first snap rib 570 and the second snap rib 420 can limit each other, thereby enabling the blade assembly 400 to be also lifted and taken out together. The first snap rib 570 and the second snap rib 420 are made of silica gel. When the user needs to separate the spoiler assembly 500 and the blade assembly 400, the user only needs to apply forces in opposite directions to the spoiler assembly 500 and the blade assembly 400 to pull out the first snap rib 570 from the second connection column 410. This operation is convenient.

Further, in this embodiment, multiple first snap ribs 570 are provided and uniformly arranged with respect to the axis of the first connection column 520. Exemplarily, three, four or five first snap ribs 570 may be provided. The second snap rib 420 is annular and coaxially disposed with the second connecting column 410, and the first connection column 520 is coaxially disposed with the second connection column 410 so that the coaxiality of the spoiler assembly 500 and the blade assembly 400 can be improved, avoiding inclining.

Further, as shown in FIG. 12, in this embodiment, the multiple first snap ribs 570 each keep a preset distance a from the inner wall of the second connection column 410 and each keep a preset distance b from the second snap rib 420, the blade assembly 400 includes the third connection column 430, the third connection column 430 is sleeved on the thimble assembly 300, connected to the second connection column 410 and located below the second connection column 410, and the first connection column 520 keeps a preset distance c from the third connection column 430. Moreover, when the multiple first snap ribs 570 are inserted into the second connection column 410 and located below the second snap rib 420, a clearance is also kept between the outer circumferential side of the first connection column 520 and the second snap rib 420 in this case. A certain clearance can be kept between the spoiler assembly 500 and the blade assembly 400 both in the height direction and circumferential direction through the configuration of the preceding clearances (it is to be understood that the spoiler assembly 500 is supported by the top of the thimble assembly 320), that is, the spoiler assembly 500 and the blade assembly 400 do not contact each other so that the spoiler assembly 500 that is not rotated from interfering with the blade assembly 400 that is rotated while noise can also be prevented.

Exemplarily, in this embodiment, the preset distance a may be 0.2 mm and more, the preset distance b may be 0.6 mm and more, and the preset distance c may be 0.5 mm and more.

Optionally, the diameter size of the stirring spoiler device in this embodiment is between 1/3 of the diameter size of the bottom of the milk frother body 100 and 1/2 of the diameter size of the bottom of the milk frother body 100.

Apparently, the preceding are only preferred embodiments of the present disclosure and technical principles used therein. It is appreciated by those skilled in the art that the present disclosure is not limited to the embodiments described herein. Those skilled in the art can make various apparent modifications, adaptations and substitutions without departing from the scope of the present disclosure. Therefore, while the present disclosure is described in detail through the preceding embodiments, the present disclosure is not limited to the preceding embodiments and may include more other equivalent embodiments without departing from the concept of the present disclosure. The scope of the present disclosure is determined by the scope of the appended claims.

It is to be noted that in the description of the specification, the description of reference terms such as "some embodiments" and "other embodiments" means that a specific feature, structure, material, or characteristic that is described in connection with the embodiments or examples is included in at least one embodiment or example of the present disclosure. In the specification, the illustrative description of the preceding terms does not necessarily refer to the same embodiment or example. Moreover, the described specific feature, structure, material, or characteristic may be combined in an appropriate manner in any one or more embodiments or examples.

## Claims

1. A milk frother, comprising:
a base (200), wherein a drive assembly (210) is disposed within the base (200), an output shaft of the drive assembly (210) is connected to a drive turntable (220), and a first magnet (230) is disposed on the drive turntable (220);
a milk frother body (100) detachably connected to the base (200), wherein a thimble assembly (300) is disposed within the milk frother body (100) and securely connected to a bottom wall of the milk frother body (100); and
a blade assembly (400) sleeved on the thimble assembly (300) and keeping a preset distance m from the bottom wall of the milk frother body (100), wherein a second magnet (440) is disposed within the blade assembly (400) and configured to magnetically connect to the first magnet (230).

2. The milk frother of claim 1, wherein the blade assembly (400) comprises a magnet box (450), wherein the magnet box (450) is sleeved on the thimble assembly (300), and the second magnet (440) is disposed within the magnet box (450).

3. The milk frother of claim 2, wherein the magnet box (450) is formed by buckling a magnet lid (4501) and a magnet seat (4502), and a mounting position for mounting the second magnet (440) is disposed on at least one of the magnet seat (4502) or the magnet lid (4501).

4. The milk frother of claim 2, wherein the blade assembly (400) further comprises a second connection column (410), a third connection column (430) and a blade (460), wherein the blade (460) is disposed on an outer circumferential side of the third connection column (430), the third connection column (430) is soldered to the magnet box (450), the second connection column (410) is located above the third connection column (430), and a filter screen (470) is disposed between the second connection column (410) and the third connection column (430), sleeved on the third connection column (430) and configured to filter and cut milk froth.

5. The milk frother of claim 4, wherein the blade (460) keeps a preset distance d from the magnet box (450).

6. The milk frother of claim 4, wherein the filter screen (470) is provided with a through hole (4701) and is circular, wherein the through hole (4701) is sleeved on the third connection column (430), and a diameter of the through hole (4701) is less than half of an outer diameter of the filter screen (470).

7. The milk frother of claim 4, wherein a plurality of blades (460) are provided and uniformly arranged with respect to an axis of the third connection column (430).

8. The milk frother of claim 4, wherein the blade assembly (400) further comprises a washer (480), wherein the washer (480) is disposed above the filter screen (470), and the washer (480) and the blade (460) jointly press against an edge of the filter screen (470) tightly.

9. The milk frother of claim 8, further comprising a spoiler assembly (500), wherein the spoiler assembly (500) is magnetically connected to the thimble assembly (300) and located above the blade assembly (400), and a magnetic force between the spoiler assembly (500) and the thimble assembly (300) is greater than a centrifugal force of rotation of the blade assembly (400) to enable the spoiler assembly (500) to remain in a static state when the blade assembly (400) stirs milk.

10. The milk frother of claim 9, wherein the spoiler assembly (500) comprises a spoiler blade (510) and a first connection column (520), wherein the spoiler blade (510) is disposed on an outer circumferential side of the first connection column (520), the first connection column (520) is magnetically connected to the thimble assembly (300), and the spoiler blade (510) keeps a preset distance e from the washer (480).
